# EUROPEAN PATENT APPLICATION

(11) **EP 1 918 508 A1**
(43) Date of publication of application: **07.05.2008**
(21) Application number: 06121528.1
(22) Date of filing: 31.10.2006
(51) Int. Cl.: E21B 41/00, H04B 10/00

(54) **Method and system for providing electrical power to downhole well equipment**

(71) Applicant: SHELL INTERNATIONALE RESEARCH MAATSCHAPPIJ B.V., 2596 HR Den Haag (NL)
(72) Inventor: Braithwaite, Stephen Richard, 2288 GS Rijswijk (NL); Franzen, Andre, 2288 GS Rijswijk (NL)
(74) Representative: Zeestraten, Albertus W. J.

(57) **Abstract**

A method for providing electrical power to downhole well equipment comprises:
- arranging a fiber optical cable and a solar cell in a well;
- transmitting light through the fiber optical cable such that the transmitted light illuminates the solar cell and the solar cell is induced to generate electricity and;
- transmitting the electricity generated by the solar cell to the downhole well equipment.

## Description

### BACKGROUND OF THE INVENTION

The invention relates to a method and system for providing electrical power to downhole well equipment. It is known to provide electrical power to downhole well equipment by means of electrical transmission systems comprising insulated electrical cables that are suspended in the well, by wireless transmission systems wherein electrical energy is transmitted via the well tubulars and/or by downhole power generators which convert hydraulic energy in the flux of well effluents into electrical energy.

US patent 6,415,869 discloses a method of transmitting electrical power to a downhole electrical submersible pump (ESP) via an electrical transmission cable. European patent EP 1252416 discloses a method of transmitting electrical power via electrically conductive well tubulars.

European patent applications EP 1448867 and 1361899 disclose downhole power generators, which convert hydraulic into electrical energy.
Disadvantages of the known downhole power generation and transmission systems are that downhole power generators are wear prone and bulky pieces of equipment, that insulated electrical power cables have a large outer diameter and that via well tubulars only a low amount of electrical energy can be transmitted and that there are high electrical power losses.

It is an object of the present invention to provide a method and a system for providing electrical power to downhole well equipment in which the disadvantages of the known electrical power supply systems are alleviated.

It is a further object of the present invention to provide a method and a system for providing electrical power to downhole well equipment such that power transmission losses are low and that a small diameter power supply conduit can be used, and such that there is no need to arrange the power supply conduit into a wear prone surrounding insulation layer.

### SUMMARY OF THE INVENTION

In accordance with the invention there is provided a method for providing electrical power to downhole well equipment, the method comprising:
- arranging a fiber optical cable and a solar cell in a well;
- transmitting light through the fiber optical cable such that the transmitted light illuminates the solar cell and the solar cell is induced to generate electricity and;
- transmitting the electricity generated by the solar cell to the downhole well equipment.

Preferably, the downhole well equipment comprises a rechargeable power storage device, such as a rechargeable battery or capacitor, which is charged by the electricity generated by the solar cell.

The well may be an oil and/or gas production well in which the fiber optical cable and solar cell are arranged in an annular space between a production tubing and well casing such that the fiber optical cable is along at least a substantial part of its length surrounded by a metal protective tube, such as a steel or aluminum tube having an outer diameter less than a few millimeters.

In accordance with the invention there is also provided a system for providing electrical power to downhole well equipment, the system comprising:
- a fiber optical cable and a solar cell that are arranged in a well such that light through the fiber optical cable illuminates the solar cell and the solar cell is induced to generate electricity and;
- means for transmitting the electricity generated by the solar cell to the downhole well equipment.

### BRIEF DESCRIPTION OF THE DRAWING

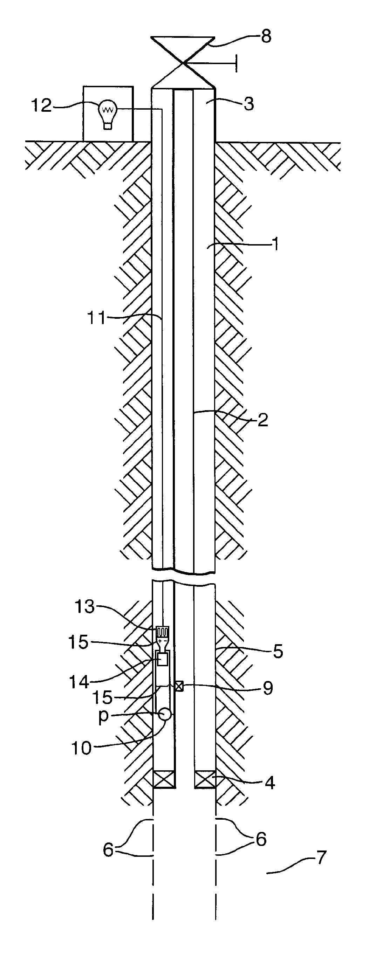

FIG.1 depicts a well, which is equipped with a system for providing electrical power to downhole equipment according to the invention.

### DETAILED DESCRIPTION OF A PREFERRED EMBODIMENT

FIG.1 depicts an oil and/or gas production well 1 in which a production tubing 2 is suspended from the wellhead 3. A production packer 4 provides a seal in the annular space between the lower end of the production tubing 2 and the surrounding well casing 5. The casing 5 comprises perforations 6 in the region below the production packer 4 to permit crude oil and/or gas to flow from an oil and/or gas bearing formation 7 into the well 1. The crude oil and/or gas subsequently flows up into the production tubing 2 towards the wellhead 3, which is equipped with a production choke 8 to control the flux of well effluents.

The well 1 is equipped with an electrically controlled gas lift valve 9 and a pressure gauge 10 to which electrical power is supplied with a system according to the invention. The system comprises a fiber optical cable 11 into which light is emitted by a light source 12 near the wellhead 3 such that the light is transferred to a solar cell 13 at the lower end of the cable 11. The solar cell 13 converts the light into electrical power, which is transmitted to a rechargeable battery or capacitor 14 via electrical cables 15. The battery or capacitor 14 may be trickle-charged by a small amount of electrical power which may be transmitted by the solar cell 13 over an extended period of time or even continuously. Electrical power that is stored in the battery or capacitor 13 is transmitted to the downhole pressure gauge 10 and electrical gas lift valve 9 and/or other electrical downhole well equipment by an electrical circuit 15.

An advantage of the system according to the invention is that the fiber optical cable 11 may have a small outer diameter of less than a millimeter and may be arranged in a steel or aluminum protective tube which may have an outer diameter of less than a few millimeters so that the fiber optical cable 11 and surrounding protective tube have a much smaller diameter than a conventional electrical conduit with a surrounding electrical insulation layer. The use of an aluminum protective tube has the advantage that it protects the fiber optical cable against hydrogen darkening than a steel protective tube. The fiber optical cable 11 may further be used for transmission of data and signals, such that the light pulses conveyed through the fiber optical cable 11 for such data and/or signal transmission simultaneously induce the solar cell 13 to charge the battery or capacitor 14. The data and signal transmission may include signals used to open or close the downhole valve 9 and pressure data generated by the downhole pressure gauge 10.

## Claims

1. A method for providing electrical power to downhole well equipment, the method comprising:
- arranging a fiber optical cable and a solar cell in a well;
- transmitting light through the fiber optical cable such that the transmitted light illuminates the solar cell and the solar cell is induced to generate electricity and;
- transmitting the electricity generated by the solar cell to the downhole well equipment.

2. The method of claim 1, wherein the downhole well equipment comprises a rechargeable power storage device, which is charged by the electricity generated by the solar cell.

3. The method of claim 2, wherein the rechargeable power storage device comprises a rechargeable electricity storage device.

4. The method of claim 2, wherein the electricity storage device comprises a rechargeable battery.

5. The method of claim 2, wherein the electricity storage device comprises a capacitor.

6. The method of claim 1, wherein the well is an oil and/or gas production well.

7. The method of claim 1, wherein the fiber optical cable is along at least a substantial part of its length surrounded by a metal protective tube.

8. The method of claim 7, wherein the protective tube is an aluminum tube.

9. The method of claim 7, wherein the protective tube is a steel tube.

10. A system for providing electrical power to downhole well equipment, the system comprising:
- a fiber optical cable and a solar cell that are arranged in a well such that light through the fiber optical cable illuminates the solar cell and the solar cell is induced to generate electricity and;
- means for transmitting the electricity generated by the solar cell to the downhole well equipment.

11. The system of claim 10, wherein the downhole well equipment comprises a rechargeable power storage device, which is chargeable by the electricity generated by the solar cell.

12. The system of claim 11, wherein the rechargeable power storage device comprises a rechargeable electricity storage device.

13. The system of claim 12, wherein the electricity storage device comprises a rechargeable battery.

14. The system of claim 12, wherein the electricity storage device comprises a capacitor.

15. The system of claim 10, wherein the well is an oil and/or gas production well.

16. The system of claim 10, wherein the fiber optical cable is along at least a substantial part of its length surrounded by a metal protective tube.

17. The system of claim 16, wherein the protective tube is an aluminum tube.

18. The method of claim 16, wherein the protective tube is a steel tube.
